# FASCICULE DE BREVET EUROPEEN

(11) **EP 3 477 280 B1**
(45) Date de publication et mention de la délivrance du brevet: **09.09.2020**
(21) Numéro de dépôt: 18201904.2
(22) Date de dépôt: 23.10.2018
(51) Int. Cl.: G01N 21/3504, G01N 21/61, G01N 21/17, G01J 3/10, G01J 3/02

(54) **SOURCE DE RAYONNEMENT INFRAROUGE MODULABLE**
MODULIERBARE INFRAROTSTRAHLENQUELLE
MODULAR INFRARED RADIATION SOURCE

(30) Priorité: 24.10.2017 FR 1760055
(43) Date de publication de la demande: 01.05.2019
(73) Titulaire: Commissariat à l'énergie atomique et aux énergies alternatives, 75015 Paris (FR)
(72) Inventeur: BOUTAMI, Salim, 38100 GRENOBLE (FR); LORENT, Emerick, 38520 CROLLES (FR)
(74) Mandataire: Brevalex

(56) Documents cités:
- EP-A1- 3 096 345
- EP-A1- 3 153 831
- WO-A1-2013/167874
- WO-A2-2017/060264
- US-B1- 6 344 647

## Description

### DOMAINE TECHNIQUE

La présente invention concerne une source de rayonnement infrarouge modulable. En particulier, l'invention concerne une source de rayonnement infrarouge adaptée pour moduler, par actionnement électrostatique, son spectre d'émission infrarouge.

### ART ANTÉRIEUR

Les sources infrarouges non-dispersives (« NDIR » ou « Non-Dispersive InfraRed » selon la terminologie Anglo-Saxonne) sont connues de l'état de la technique, et sont couramment mises en œuvre dans des détecteurs de gaz.

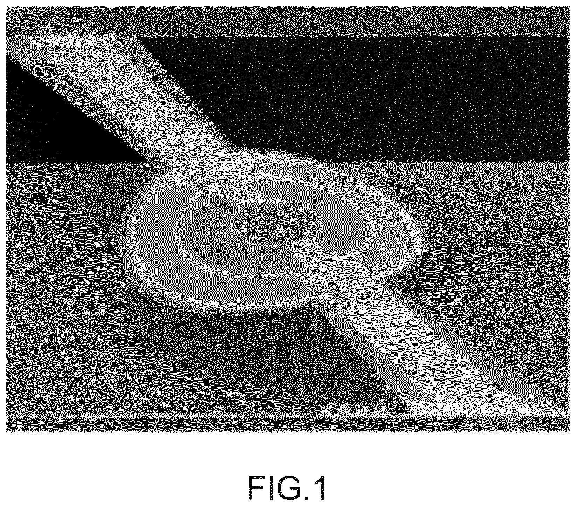

À titre d'exemple, la figure 1 illustre une micro-source infrarouge connue de l'état de la technique et décrite par Barritault *et al.* [1]. En particulier, la micro-source infrarouge comprend un filament métallique formé sur une membrane suspendue par deux bras de suspension.

Le filament métallique, lorsqu'il est parcouru par un courant électrique, chauffe et émet un rayonnement infrarouge selon la loi du corps noir.

Cependant, cette source infrarouge connue de l'état de la technique n'est pas satisfaisante.

En effet, la dynamique de mise en route et/ou d'extinction de ce type de source repose sur un équilibre thermique très lent de sorte que la fréquence de modulation de ladite source ne dépasse pas un kilohertz.

Aussi, dès lors que des fréquences de modulation de l'ordre de la dizaine de kHz sont requises, notamment pour la détection photo acoustique des gaz, des lasers à cascade quantique (ci-après « QCL ») sont généralement mis en œuvre.

Toutefois, ces derniers, du fait de leur très faible rendement (inférieur à 1%), consomment trop d'énergie.

Par ailleurs, les QCL sont généralement associés à un système de refroidissement, par exemple un système Pelletier, qui nuit à l'encombrement du système dans lequel ils sont intégrés.

Enfin, les QCL sont également très onéreux.

Un but de la présente invention est alors de proposer une source de rayonnement infrarouge permettant une modulation dudit rayonnement à des fréquences pouvant atteindre la dizaine de kHz.

Un autre but de la présente invention est de proposer une source de rayonnement infrarouge ne nécessitant pas la mise en œuvre d'un système de refroidissement, et par conséquent plus compact.

Le document WO 2017/060264 décrit une source de rayonnement infrarouge modulable et son procédé de fabrication, la source comprenant un support pourvu d'une paroi plane, une membrane émettant un rayonnement infrarouge et maintenue en suspension par rapport au support, et des moyens d'actionnement piézoélectriques pour faire varier la distance entre le support et la membrane.

### EXPOSÉ DE L'INVENTION

Les buts de l'invention sont au moins en partie atteints par une source de rayonnement infrarouge modulable qui comprend :
- un support pourvu d'une paroi plane ;
- une membrane comprenant deux faces essentiellement parallèles dites, respectivement, face avant et face arrière, la membrane étant adaptée pour émettre un rayonnement infrarouge selon l'une et l'autre de ses faces et maintenue en suspension par rapport au support, la face arrière étant en regard et à une distance D de la paroi, ladite paroi étant en outre adaptée pour réfléchir le rayonnement infrarouge susceptible d'être émis par la membrane ;
- des moyens d'actionnement électrostatique qui comprennent deux électrodes dites, respectivement, première électrode et seconde électrode, disposées en regard l'une de l'autre, et destinées, par application d'une différence de potentiel électrostatique entre lesdites électrodes, à faire varier la distance D

la membrane et les moyens d'actionnement électrostatique étant agencées de sorte que, pour chaque longueur d'onde,
le rayonnement infrarouge émis par la face arrière est réfléchi par la paroi, traverse la membrane de sa face arrière vers sa face avant et interfère avec le rayonnement infrarouge émis par la face avant.

Selon un mode de mise en œuvre, la membrane comprend une couche émissive qui, lorsqu'elle est traversée par un courant, chauffe et émet le rayonnement infrarouge.

Selon un mode de mise en œuvre, la membrane comprend de sa face avant vers sa face arrière, une couche diélectrique avant, la couche émissive, et une couche diélectrique arrière.

Selon un mode de mise en œuvre, la paroi forme la première électrode et la seconde électrode est en recouvrement de la face arrière, la seconde électrode étant au moins partiellement transparente au rayonnement infrarouge susceptible d'être émis par la membrane.

Selon un mode de mise en œuvre, la seconde électrode est ajourée de sorte que ladite seconde électrode recouvre la face arrière selon un facteur de recouvrement compris entre 40 % et 60 %.

Selon un mode de mise en œuvre, la seconde électrode présente au moins l'une des formes choisie parmi : une grille, une spirale circulaire, une spirale rectangulaire, un serpentin.

Selon un mode de mise en œuvre, la seconde électrode comprend une espèce métallique, avantageusement l'espèce métallique comprend au moins un des éléments choisi parmi : cuivre, aluminium, tungstène or, platine, argent, palladium, tantale, molybdène.

Selon un mode de mise en œuvre, la seconde électrode recouvre intégralement la face arrière, avantageusement, la seconde électrode est faite d'oxyde transparent conducteur.

Selon un mode de mise en œuvre, la support est une enceinte hermétiquement fermée, à l'intérieur de laquelle la membrane est disposée, et dont l'environnement est maintenu à une pression inférieure à 10⁻² mbar, préférentiellement comprise entre 10⁻³ mbar et 10⁻² mbar.

Selon un mode de mise en œuvre, l'une et/ou l'autre des électrodes comprend un piège adapté, dès lors qu'il est chauffé, pour piéger au moins en partie des espèces gazeuses susceptible d'être présentes dans l'enceinte, avantageusement l'une et/ou l'autre des deux électrodes comprend du titane et/ou du zirconium.

Selon un mode de mise en œuvre, la seconde électrode comprend le piège.

Selon un mode de mise en œuvre, la source comprend en outre un filtre passe bande destiné à filtrer le rayonnement infrarouge émis par ladite source.

L'invention concerne également un dispositif de détection photo acoustique des gaz mettant en œuvre la source selon la présente invention.

L'invention concerne également un dispositif de détection des gaz par spectroscopie infrarouge mettant en œuvre la source selon la présente invention.

L'invention concerne également un procédé de fabrication d'une source de rayonnement infrarouge, le procédé comprenant :
a) une étape de formation d'une membrane comprenant deux faces essentiellement parallèles dites, respectivement, face avant et face arrière, la membrane étant adaptée pour émettre un rayonnement infrarouge selon l'une et l'autre de ses faces, la membrane étant maintenue en suspension par rapport à un support, la face arrière en regard et à une distance D d'une paroi, ladite paroi étant en outre adaptée pour réfléchir le rayonnement infrarouge susceptible d'être émis par la membrane ;
b) la formation de moyens d'actionnement électrostatique qui comprennent deux électrodes dites, respectivement, première électrode et seconde électrode, disposées en regard l'une de l'autre, et destinées, par application d'une différence de potentiel électrostatique entre lesdites électrodes, à faire varier la distance D ;
   la membrane et les moyens d'actionnement électrostatique étant agencées de sorte que, pour chaque longueur d'onde, le rayonnement infrarouge émis par la face arrière, est réfléchi par la paroi, traverse la membrane de sa face arrière vers sa face avant et interfère avec le rayonnement infrarouge émis par la face avant.

Selon un mode de mise en œuvre, l'étape a) comprend la formation d'un empilement sur une première face d'un substrat support, ledit empilement étant destiné à former la membrane.

Selon un mode de mise en œuvre, le substrat support est assemblé avec un second substrat support, l'assemblage étant avantageusement hermétique, le second substrat support comprenant une cavité dont le fond forme la paroi, avantageusement la paroi est tapissée d'une électrode dite première électrode.

Selon un mode de mise en œuvre, l'assemblage du substrat support et du second substrat support est suivi de la formation d'une ouverture traversante du substrat support à partir d'une seconde face dudit substrat support opposée à la première face, la formation de l'ouverture traversante destinée à libérer la membrane.

Selon un mode de mise en œuvre, l'étape b) comprend la formation d'une seconde électrode en recouvrement de la membrane.

Selon un mode de mise en œuvre, un capot est formé en recouvrement de l'ouverture traversante par la seconde face du substrat support.

### BRÈVE DESCRIPTION DES DESSINS

D'autres caractéristiques et avantages apparaîtront dans la description qui va suivre des modes de réalisation de la source de rayonnement infrarouge modulable, donnés à titre d'exemples non limitatifs, en référence aux dessins annexés dans lesquels :
- la figure 1 est une image, obtenue par microscopie, d'un élément résistif connu de l'état de la technique ;
- les figures 2a et 2b sont des représentations schématiques d'une source de rayonnement infrarouge modulable selon la présente invention selon un plan de coupe perpendiculaire à la membrane, en particulier la différence de potentiel entre les deux électrodes est nulle et non nulle, respectivement, à la figure 2a et à la figure 2b ;
- les figures 3a à 3d sont des représentations schématiques de secondes électrodes susceptibles d'être mises en œuvre dans la présente invention ;
- la figure 4 est une représentation schématique, selon un plan de coupe perpendiculaire à la face arrière, d'une membrane susceptible d'être mise en œuvre dans la cadre de la présente invention ;
- la figure 5 est une représentation graphique de l'émissivité (axe vertical) de la source infrarouge en fonction de la longueur d'onde λ (axe horizontal) pour différentes distances D (courbe A : D=2,25 µm ; courbe B : D=1,75 µm ; courbe C : D=1,25 µm ; courbe D : D=0,75 µm ; courbe E : D=0,25 µm).

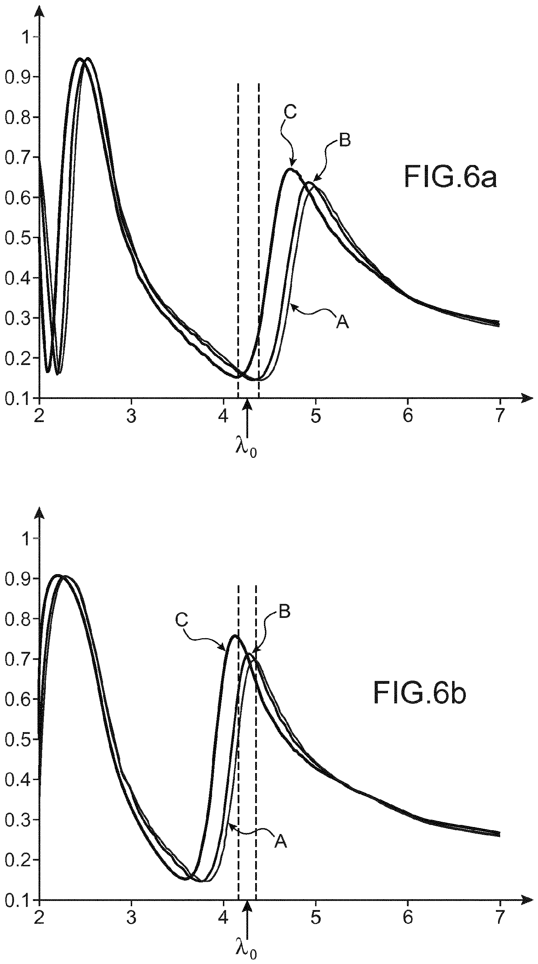

- les figures 6a et 6b sont des représentations graphiques de l'émissivité (selon l'axe vertical) de la source de rayonnement infrarouge pour différents angles d'émission par rapport à une direction normale à ladite membrane (courbe A à 0°, courbe B à +/- 10°, et courbe C à +/- 20°), l'émissivité étant donnée en fonction de la longueur d'onde (selon l'axe horizontal) ; en particulier, la figure 6a représente l'émissivité de ladite source en l'absence de potentiel électrostatique appliqué entre les deux électrodes, tandis qu'à la figure 6b, un potentiel électrostatique est imposé de manière à déplacer la membrane de 250 nm ;
- la figure 7 est une représentation schématique de la source infrarouge selon la présente invention disposée dans une enceinte hermétique ;
- les figures 8a à 8e sont une représentation schématique d'un procédé de fabrication de la source de rayonnement infrarouge modulable selon la présente invention.

### EXPOSÉ DÉTAILLÉ DE MODES DE RÉALISATION PARTICULIERS

L'invention décrite de manière détaillée ci-dessous met en œuvre une source de rayonnement infrarouge modulable qui comprend une membrane adaptée pour émettre un rayonnement infrarouge selon ses deux faces dites, respectivement, face avant et face arrière. La membrane est, par ailleurs, maintenue en suspension par rapport à un support, la face arrière étant en regard de et à une distance D d'une paroi réfléchissante dudit support.

La source de rayonnement infrarouge comprend, en outre, des moyens d'actionnement électrostatique qui, par application d'une tension électrique, sont adaptés pour faire varier la distance D.

Ainsi, selon cet agencement, pour toute longueur d'onde λ, le rayonnement infrarouge émis par la face arrière est réfléchi par la paroi en direction de la membrane, traverse cette dernière de sa face arrière vers sa face avant et interfère avec le rayonnement infrarouge émis par la face avant. L'état d'interférence pour chaque longueur d'onde est alors dépendant de la variation de distance D imposée par les moyens d'actionnement électrostatique.

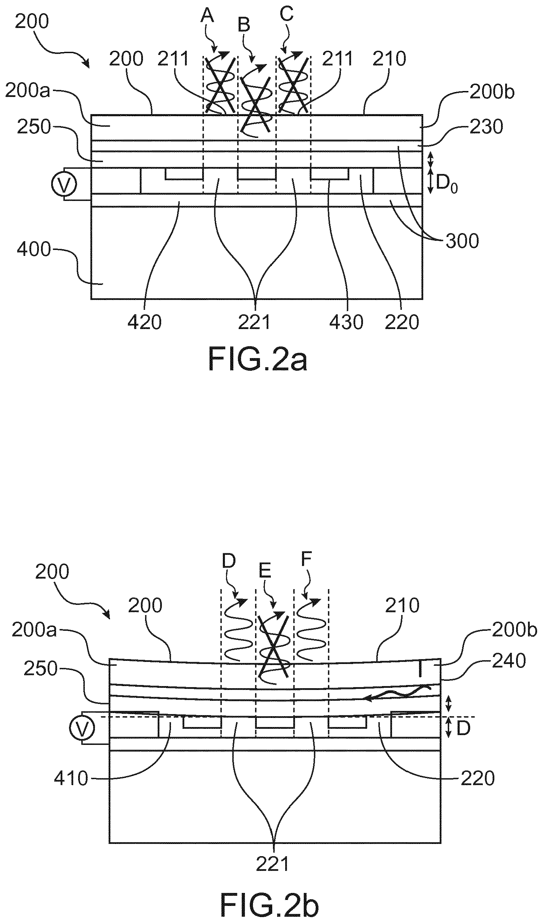

Sur les figures 2a à 7, on peut voir une source de rayonnement infrarouge 100 selon la présente invention.

La source de rayonnement infrarouge 100 comprend une membrane 200 (figures 2a et 2b).

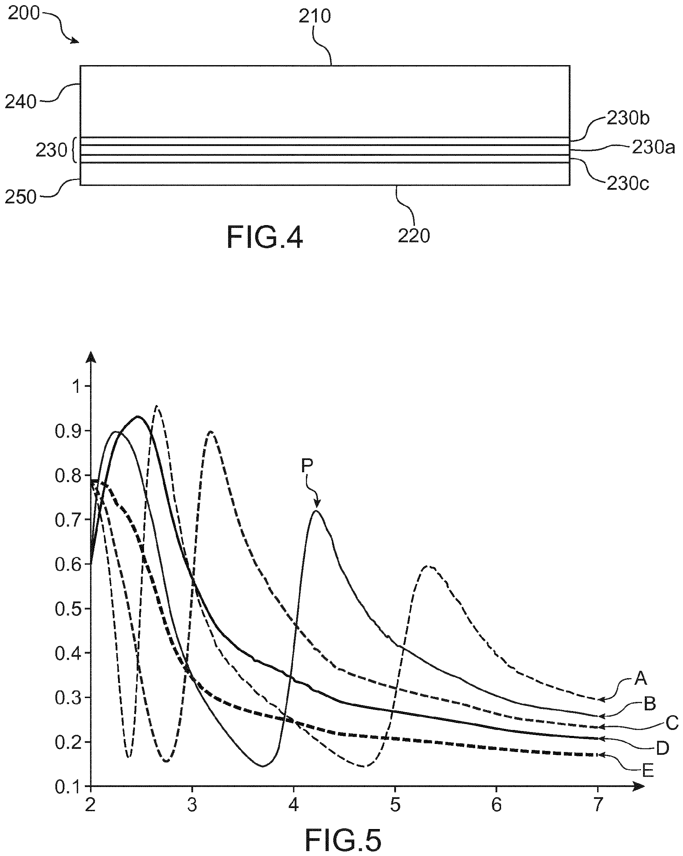

La membrane 200 comprend deux faces essentiellement parallèles dites, respectivement, face avant 210 et face arrière 220, et est adaptée pour émettre un rayonnement infrarouge selon l'une et l'autre de ses deux faces (figure 2a, 2b, et 4).

La membrane 200 peut être de forme carrée, rectangulaire, ou encore circulaire.

La membrane 200 peut également présenter une épaisseur comprise entre 100 nm et 1 µm, en particulier la membrane 200 peut présenter une épaisseur de 200 nm.

Par « rayonnement infrarouge », on entend un rayonnement lumineux dans un domaine de longueurs d'ondes comprises entre 1 µm et 12 µm, avantageusement entre 3 µm et 12 µm.

De manière avantageuse, la membrane 200 peut comprendre une couche émissive 230 qui, lorsqu'elle est chauffée (par exemple lorsqu'elle est traversée par un courant électrique), produit et émet le rayonnement infrarouge.

Il est donc entendu que la source de rayonnement infrarouge 100 peut comprendre des moyens générateurs de courant destinés à imposer le passage d'un courant dans la couche émissive 230.

La couche émissive 230 peut, par exemple, comprendre une couche de platine 230a de 30 nm d'épaisseur intercalée entre deux couches de TiN, 230b et 230c, de 10 nm chacune (figure 4).

Toujours de manière avantageuse, la membrane 200 peut comprendre, de sa face avant 210 vers sa face arrière 220, une couche diélectrique avant 240, la couche émissive 230, et une couche diélectrique arrière 250 (figures 2a, 2b et 4).

Les couches diélectriques avant 240 et arrière 250 peuvent comprendre au moins un des éléments choisi parmi : dioxyde de silicium, nitrure de silicium.

Les couches diélectriques avant 240 et arrière 250 peuvent présenter une épaisseur comprise 50 nm et 500 nm.

La source de rayonnement infrarouge 100 comprend, en outre, un support 400 pourvu d'une paroi 410 plane, ladite paroi étant adaptée pour réfléchir le rayonnement infrarouge susceptible d'être émis par la membrane 200.

Au sens de la présente invention, le terme « paroi » est assimilé à une face, avantageusement plane.

Par « adaptée pour réfléchir le rayonnement infrarouge », on entend une paroi présentant un coefficient de réflexion dans la gamme de longueurs d'ondes du rayonnement infrarouge considéré supérieur à 75 %, avantageusement supérieur à 90 %, encore plus avantageusement supérieur à 95 %.

Selon la présente invention, la membrane 200 est maintenue en suspension par rapport au support 400, la face arrière 220 en regard et à une distance D de la paroi 410.

Par « maintenue en suspension », on entend une membrane 200 maintenue au support 400, par exemple, par deux bras de suspension 200a et 200b (figures 2a et 2b).

La source de rayonnement infrarouge 100 comprend également des moyens d'actionnement électrostatique 300 adaptés pour faire varier la distance D.

Par « actionneur électrostatique » ou « moyen d'actionnement électrostatique », on entend des moyens qui permettent d'imposer, en réponse à une interaction électrostatique, le déplacement relatif de deux composantes mobiles. Dans le cadre de la présente invention, l'interaction électrostatique peut avoir pour origine une différence de potentiel électrostatique imposée entre une première électrode 420 et une seconde électrode 430 solidaires (figures 2a et 2b), respectivement, du support 400 et de la membrane 200. La distance D pour laquelle la différence de potentiel électrostatique entre la première électrode 410 et la seconde électrode 420 est nulle est dite distance à potentiel nul Do.

La différence de potentiel électrostatique peut par exemple être imposée par une source de tension. Il est entendu que la première électrode 420 et la seconde électrode 430 comprennent chacune une borne de connexion au niveau de laquelle peut être imposé un potentiel électrostatique.

La membrane 200 et les moyens d'actionnement électrostatique 300 sont agencés de sorte que, pour chaque longueur d'onde λ, le rayonnement infrarouge émis par la face arrière 220 est réfléchi par la paroi 410, traverse la membrane 200 de sa face arrière 220 vers sa face avant 210, et interfère avec le rayonnement infrarouge émis par la face avant 210.

En d'autres termes, pour chaque longueur d'onde λ, le rayonnement infrarouge émis par la face arrière 220 se voit imposer une différence de marche ou déphasage, par rapport au rayonnement infrarouge émis par la face avant 210, due à la distance D et à la réflexion contre la paroi 410 (et dans une moindre mesure par sa traversée de la membrane). Les interférences produites peuvent alors être constructives ou destructives selon le déphasage induit.

Il est entendu que l'agencement précité impose à la face arrière 220 et à la paroi 410 d'être essentiellement parallèles entre elles.

De manière avantageuse, la paroi 410 forme la première électrode 420. Par exemple, la première électrode 420 est une couche, avantageusement une couche métallique. La couche métallique peut être une couche d'aluminium. La seconde électrode 430 (qui est en regard de la première électrode) est, dans ces conditions, en recouvrement de la face arrière 220, et est, au moins partiellement, transparente au rayonnement infrarouge.

Par « au moins partiellement transparente au rayonnement infrarouge », on entend une seconde électrode 430 qui présente un coefficient de transmission du rayonnement infrarouge supérieur à 40 %, par exemple compris entre 40 % et 60 %.

Selon un premier mode de réalisation, la seconde électrode 430 peut être ajourée. Par « électrode ajourée », on entend une électrode électriquement continue et qui présente une ou des ouvertures traversantes 431 (figures 2a, 2b et 4a à 4d) permettant d'exposer une ou des zones arrière 221 de la face arrière 220.

Les ouvertures traversantes 431 présentent avantageusement une dimension supérieure à 10 µm, de préférence supérieure à 50 µm.

Selon ce mode de réalisation, la seconde électrode 430 peut avantageusement être faite d'une espèce métallique.

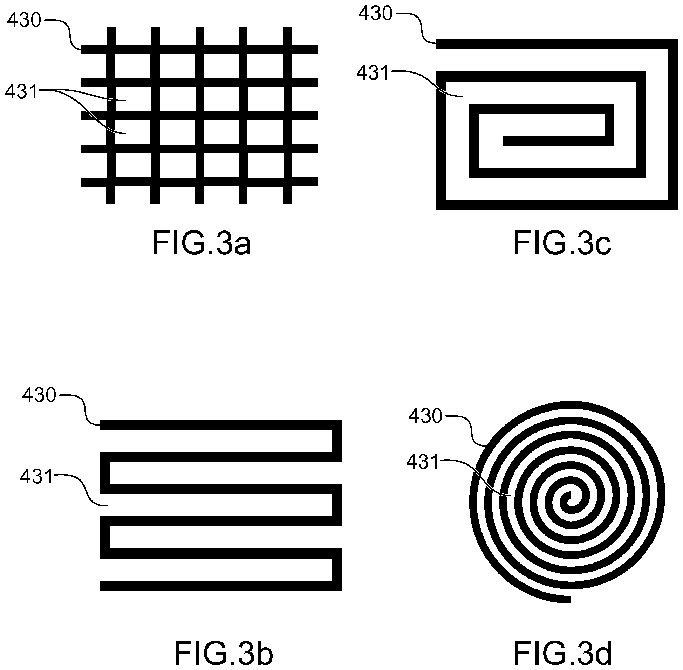

La transparence de la seconde électrode 430 est alors ajustée par l'étendue des ouvertures traversantes 431. En particulier, les figures 3a à 3d représentent des formes de secondes électrodes susceptibles d'être mises en œuvre selon le premier mode de réalisation. Telle que représentée sur ces figures, la seconde électrode peut avoir la forme d'une grille (figure 3a), d'un serpentin (figure 3b), d'une spirale rectangulaire (figure 3c), ou encore d'une spirale circulaire (figure 3d). L'invention n'est toutefois pas limitée à ces formes.

Par ailleurs, dès lors qu'elle est métallique, la seconde électrode 430 peut comprendre au moins un des métaux choisi parmi : aluminium, cuivre, tungstène or, platine, argent, palladium, tantale, molybdène.

En fonctionnement, et selon ce premier mode de réalisation dans lequel la seconde électrode 430 est ajourée et comprend une espèce métallique, seule la ou les zones arrière 221 non recouvertes de métal, ainsi que la ou les zones avant 211 de la face avant 210 en regard des zones arrière 221, sont susceptibles d'émettre un rayonnement infrarouge.

Les autres zones de la face avant 210 et de la face arrière 220, du fait de leur proximité d'une seconde électrode métallique, voient leur rayonnement infrarouge annihilé par ladite électrode. L'annihilation du rayonnement est symbolisée, aux figures 2a et 2b par un rayonnement barré d'une croix (repères A, C, D et F).

Ainsi, le rayonnement infrarouge émis par la ou les zones arrières 221, pour chacune de ses longueurs d'ondes, après réflexion contre la première électrode 420, traverse la membrane de sa face arrière 220 vers sa face avant 210 au niveau de la ou des zones arrière 221 pour interférer avec le rayonnement infrarouge émis au niveau de la ou des zones avant 211.

Tel qu'illustré à la figure 5, l'état d'interférence pour chacune des longueurs d'ondes du rayonnement infrarouge émis dépend alors de ladite longueur d'onde et de la distance D, et en particulier de la différence de potentiel appliquée entre les deux électrodes.

Il est ainsi possible de moduler l'amplitude d'émission de la source infrarouge 100 par un simple déplacement mécanique (en d'autres termes par modification de la distance D). Plus particulièrement, la modification de la distance D est exécutée par application d'une différence de potentiel électrostatique appliquée entre la première électrode 410 et la seconde électrode 420.

Cet effet est particulièrement avantageux, puisque l'activation électrostatique présente une dynamique suffisante pour réaliser une modulation de l'émissivité de la source de rayonnement infrarouge à des fréquences supérieures à la dizaine de kilohertz, et pouvant potentiellement atteindre le Mégahertz.

La source de rayonnement infrarouge 100 selon la présente invention peut alors être mise en œuvre dans un détecteur de gaz fonctionnant sur le principe de la détection photo acoustique, en particulier pour la détection d'un gaz présentant une absorption à une longueur d'onde d'intérêt, notée λ₀.

Ainsi, la distance à potentiel nul Do peut, par exemple, être la distance pour laquelle le rayonnement à la longueur d'onde d'intérêt λ₀ émis par la face arrière 220 interfère de manière destructive avec le rayonnement émis par la face avant 210.

Par exemple, le gaz à détecter peut être du dioxyde de carbone (CO2) qui présente une absorption à la longueur d'onde d'intérêt λ₀ = 4,26 µm. La distance à potentiel nul D₀ est alors avantageusement égale à 2,1 µm. Tel qu'illustré à la figure 6a, la source de rayonnement infrarouge présente un creux d'émissivité à la longueur d'onde λ₀ dû aux interférences destructives. Le déplacement de la membrane de 0,25 µm à une distance D₁ = 1,85 µm par application d'une différence de potentiel électrostatique entre les deux électrodes permet de maximiser l'émissivité de la membrane à la longueur d'onde λ₀ (figure 6b) grâce aux interférences constructives. L'oscillation de la membrane entre deux positions correspondant aux distances D₀ et D₁ à une fréquence supérieure à 10 kHz peut alors avantageusement être mise à profit pour la détection photo acoustique d'un gaz, et en particulier le CO2.

La source de rayonnement infrarouge peut également être pourvue d'un filtre passe bande.

Le filtre passe bande, dès lors que la source de rayonnement infrarouge est mise en œuvre dans un dispositif de détection photo acoustique, peut présenter un bande passante étroite, par exemple de 0,2 µm de large de manière à rendre le détecteur sélectif à un gaz particulier. Par exemple, pour une longueur d'onde d'intérêt λ₀ = 4,26 µm, le filtre peut présenter la bande passante 4,16 µm - 4,36 µm.

Le filtre passe bande peut également, pour d'autres applications comme la spectroscopie infrarouge, présenter une bande passante plus large.

Les inventeurs ont également démontré par simulation numérique que la modulation du spectre d'émissivité de la membrane est effective dans un cône de 40° par rapport à la normale de la surface de ladite membrane (figures 6a et 6b)

L'invention concerne également un second mode de réalisation qui diffère du premier mode de réalisation en ce que la seconde électrode 430 recouvre intégralement la face arrière 220, avantageusement, la seconde électrode est faite d'oxyde transparent conducteur. Selon ce mode de réalisation, et contrairement au premier mode, l'intégralité de la face avant 210 et de la face arrière 220 sont émissives. Par « transparent », on entend un oxyde transparent conducteur présentant un coefficient d'extinction k, aux longueurs d'ondes impliquées, inférieur à 0,25.

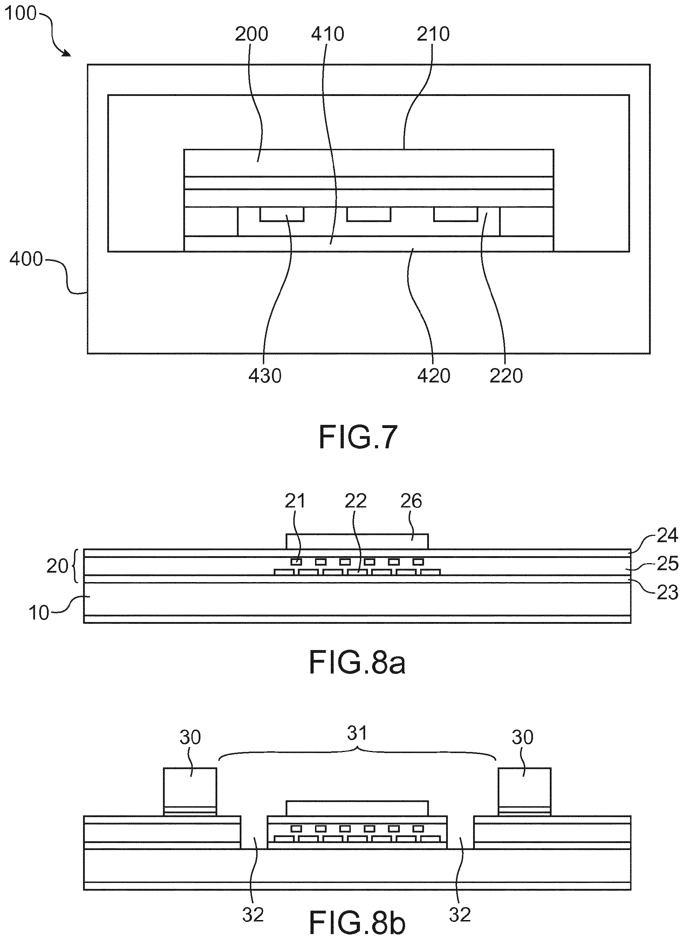

Selon l'un ou l'autre des deux modes de réalisation, le support 400 peut être une enceinte hermétiquement fermée, à l'intérieur de laquelle la membrane est disposée, et dont l'environnement est maintenu à une pression inférieure à 10⁻² mbar, préférentiellement comprise entre 10⁻³ mbar et 10⁻² mbar (figure 7).

La mise en œuvre de l'enceinte hermétiquement fermée permet de limiter les pertes par conduction thermique dans l'air.

L'enceinte peut avantageusement être faite en un matériau transparent au rayonnement infrarouge, par exemple du silicium.

Par ailleurs, la seconde électrode 420 peut comprendre un piège ou getter en anglais adapté, dès lors qu'il est chauffé, pour piéger au moins en partie des espèces gazeuses susceptible d'être présentes dans l'enceinte.

En général, un tel piège est mis en œuvre lors de l'encapsulation de la membrane dans une enceinte hermétiquement fermée (aussi appelée étape de « packaging »), afin d'assurer un vide dans ladite enceinte et ainsi limiter les pertes de rayonnement infrarouge susceptible d'être émis par la membrane.

Cependant, à l'issue de l'étape de « packaging », le piège, plus précisément sa surface, n'est pas saturée. En effet, les espèces gazeuses piégées au niveau de la surface du piège migrent sous l'effet de la température dans le volume du piège (dans la masse dudit piège) de sorte que la surface de ce dernier est régénérée. En d'autres termes, le piège peut encore absorber des espèces gazeuses dès lors que des moyens sont mis en œuvre pour qu'il soit chauffé à une température, dite température d'activation.

À cet égard, le vide dans l'enceinte hermétique peut se dégrader (augmentation de la pression) lors du fonctionnement de la membrane. Par exemple, une augmentation de la pression dans l'enceinte peut résulter de la désorption d'espèces gazeuses au niveau de la membrane 200, en particulier lorsque cette dernière est chauffée pour émettre un rayonnement infrarouge. Cette augmentation de pression à l'intérieur de l'enceinte dégrade l'efficacité thermique de la source de rayonnement infrarouge 100. La mise en œuvre du piège permet de répondre à cette problématique.

En effet, selon la présente invention, lorsque la membrane 200 est chauffée pour produire un rayonnement infrarouge, la seconde électrode 430 pourvue du piège, qui se trouve à proximité de ladite électrode, voit également sa température augmenter à une température supérieure à la température d'activation du piège. En d'autres termes, le chauffage de la membrane permet de chauffer continument le piège de sorte que ce dernier absorbe les espèces gazeuses susceptibles d'être désorbées par la membrane. Ainsi le vide dans l'enceinte peut être maintenu à un niveau compatible avec les requis en termes de pertes thermiques et/ou infrarouges.

Avantageusement une seconde électrode 420 faite de titane et/ou de zirconium forme un piège pour les espèces gazeuses.

En effet, tant le titane que le zirconium sont des matériaux de choix pour former la seconde électrode 420. Ces éléments peuvent avantageusement jouer le rôle de pompe (ou micro-pompe), et ainsi absorber, au moins en partie, des espèces susceptibles d'être désorbées par la membrane 200.La source de rayonnement infrarouge selon la présente invention peut être mise en œuvre pour la détection de gaz par spectroscopie infrarouge, en particulier pour la détection de plusieurs gaz sans avoir nécessairement recours à un filtre mais en mettant à profit la modulation de l'émissivité de la source infrarouge.

L'invention concerne également un dispositif de détection de gaz par spectroscopie infrarouge.

La fabrication de la source infrarouge 200 selon la présente invention met en œuvre des étapes standard de micro fabrication connues de l'homme du métier.

Une première étape 1) de fabrication illustrée à la figure 8a comprend la formation d'un empilement 20 sur un substrat support 10, par exemple un substrat support en silicium.

L'empilement 20 est en particulier destiné à former la membrane 200.

À cet égard, l'empilement peut comprendre un élément chauffant 21 destiné à chauffer une couche émissive 22, toutes deux intercalées entre deux couches faites d'un matériau diélectrique 23 et 24, par exemple du dioxyde de silicium. En complément, l'élément chauffant 21 et la couche émissive 22 peuvent être noyés dans une autre couche diélectrique 25, par exemple faite de nitrure de silicium.

La première étape 1) comprend également la formation d'une électrode 26 (seconde électrode au sens de la présente invention) à l'aplomb de l'élément chauffant 21 et de la couche émissive 22.

Les différentes étapes de formation de l'empilement 20 font appel à des techniques de micro fabrication connues de l'homme du métier et ne sont pas décrites dans la présente invention.

Le procédé de fabrication comprend une seconde étape 2) illustrée à la figure 8b.

La seconde étape 2) comprend la formation d'une première structure de collage 30, faite par exemple d'or et de chrome, et délimitant une région de membrane 31 à l'intérieur de laquelle se trouve la membrane. Cette étape peut impliquer un ou plusieurs dépôts métalliques (par exemple par évaporation) ainsi que des étapes de photolithographie/gravure.

La seconde étape 2) comprend en outre la formation d'une tranchée 32 traversant l'empilement 20, et définissant la membrane au niveau de la région de membrane 31. La tranchée 32 peut être formée via une gravure, par exemple une gravure sèche.

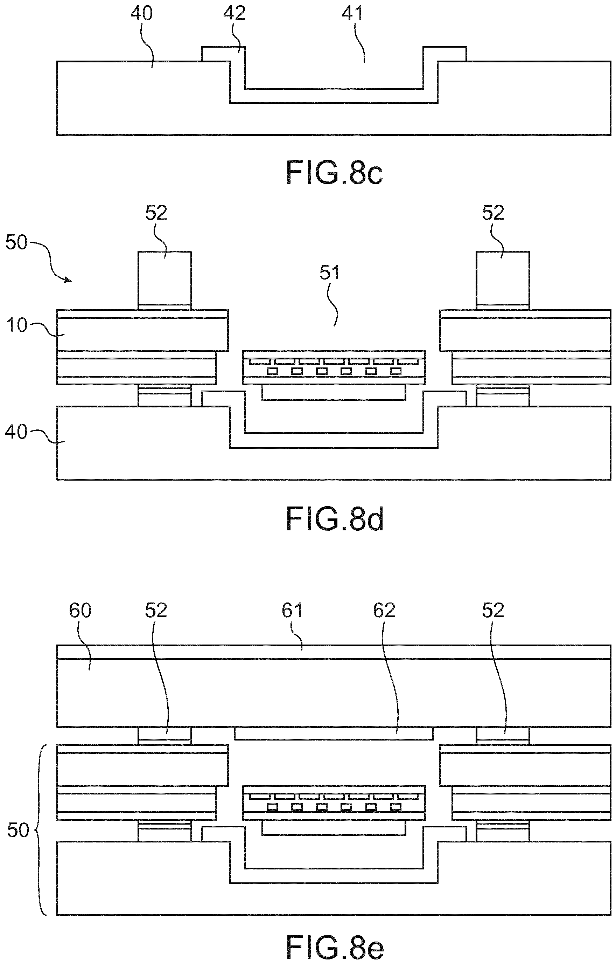

Une troisième étape 3), illustrée à la figure 8c, peut ensuite être exécutée.

La troisième étape comprend la formation d'une cavité 41, par exemple par gravure sèche, selon une face d'un second substrat support 40. Selon cette troisième étape, la cavité 41 est également tapissée d'une électrode 42, dite première électrode selon la présente invention.

La troisième étape 3) est alors suivie d'une quatrième étape 4) d'assemblage du substrat support 10 et du second substrat support 40 (figure 8d) pour former un premier assemblage 50. L'assemblage est exécuté de manière à mettre en correspondance (ou en regard), les première et seconde électrodes. Un scellement hermétique entre le substrat support 10 et le second substrat support 40 est alors assuré par la première structure de collage 30.

La quatrième étape 4) comprend en outre la formation d'une ouverture traversante 51 au niveau du substrat support 10 destinée à libérer la membrane. La formation de l'ouverture traversante 51 peut être précédée d'un amincissement du substrat support 10 par abrasion mécanique par exemple.

Une seconde structure de collage 52 est également formée, à l'aplomb de la première structure de collage 30, sur une face libre du premier assemble 50 au niveau du substrat support 10. En particulier, la seconde structure de collage entoure l'ouverture traversante 51.

Enfin, le procédé de fabrication comprend une cinquième étape représentée à la figure 8e de formation d'un capot 60 destiné à enfermer hermétiquement la membrane dans une enceinte.

La cinquième étape comprend donc le collage du capot 60 en recouvrement de l'ouverture traversante 51. Le scellement hermétique du capot 60 est assuré par la seconde structure de collage 52. Le capot 60 peut également être pourvu de couches antireflet 61 et 62 sur l'une et/ou l'autre de ses faces.

La pression de la cavité ainsi formée peut être contrôlée lors de l'étape de collage du capot, par exemple en activant thermiquement un piège disposé dans la cavité. Tel que précisé dans la présente description, la seconde électrode peut comprendre le piège, en particulier ladite seconde électrode peut être faite d'un matériau piège, par exemple en titane et/ou en zirconium.

### RÉFÉRENCES

[1] Pierre Barritault et al., "Mid-IR source based on a free-standing microhotplate for autonomous CO2 sensing in indoor- applications", Sensors and Actuators A, 172, p. 379-385, (2011).

## Revendications

1. Source de rayonnement infrarouge (100) modulable qui comprend :
- un support (400) pourvu d'une paroi (410) plane ;
- une membrane (200) comprenant deux faces essentiellement parallèles dites, respectivement, face avant (210) et face arrière (220), la membrane (200) étant adaptée pour émettre un rayonnement infrarouge selon l'une et l'autre de ses faces, et maintenue en suspension par rapport au support (400), la face arrière (220) en regard et à une distance D de la paroi (410), ladite paroi (410) étant en outre adaptée pour réfléchir le rayonnement infrarouge susceptible d'être émis par la membrane (200) ;
- des moyens d'actionnement électrostatique (300) qui comprennent deux électrodes dites, respectivement, première électrode (420) et seconde électrode (430), disposées en regard l'une de l'autre, et destinées, par application d'une différence de potentiel électrostatique entre lesdites électrodes, à faire varier la distance D ;
la membrane (200) et les moyens d'actionnement électrostatique (300) étant agencées de sorte que, pour chaque longueur d'onde, le rayonnement infrarouge émis par la face arrière (220), est réfléchi par la paroi (410), traverse la membrane (200) de sa face arrière (220) vers sa face avant (210) et interfère avec le rayonnement infrarouge émis par la face avant (210).

2. Source selon la revendication 1, dans laquelle la membrane (200) comprend une couche émissive (230) qui, lorsqu'elle est traversée par un courant, chauffe et émet le rayonnement infrarouge.

3. Source selon la revendication 2, dans laquelle la membrane (200) comprend de sa face avant (210) vers sa face arrière (220), une couche diélectrique avant (240), la couche émissive (230), et une couche diélectrique arrière (250).

4. Source selon l'une des revendications 1 à 3, dans laquelle la paroi (410) forme la première électrode (420) et la seconde électrode (430) est en recouvrement de la face arrière (220), la seconde électrode (430) étant au moins partiellement transparente au rayonnement infrarouge susceptible d'être émis par la membrane (200).

5. Source selon la revendication 4, dans laquelle la seconde électrode (430) est ajourée de sorte que ladite seconde électrode (430) recouvre la face arrière (220) selon un facteur de recouvrement compris entre 40 % et 60 %.

6. Source selon la revendication 5, dans laquelle la seconde électrode (430) présente au moins l'une des formes choisie parmi : une grille, une spirale circulaire, une spirale rectangulaire, un serpentin.

7. Source selon la revendication 5 ou 6, dans laquelle la seconde électrode (430) comprend une espèce métallique, avantageusement l'espèce métallique comprenant au moins l'un des éléments choisi parmi : cuivre, aluminium, tungstène or, platine, argent, palladium, tantale, molybdène.

8. Source selon la revendication 4, dans laquelle la seconde électrode (430) recouvre intégralement la face arrière (220), avantageusement, la seconde électrode (430) est faite d'oxyde transparent conducteur.

9. Source selon l'une des revendications 1 à 8, dans laquelle la support (400) est une enceinte hermétiquement fermée, à l'intérieur de laquelle la membrane (200) est disposée, et dont l'environnement est maintenu à une pression inférieure à 10⁻² mbar, préférentiellement comprise entre 10⁻³ mbar et 10⁻² mbar.

10. Source selon la revendication 8, dans laquelle l'une et/ou l'autre des électrodes comprend un piège adapté, dès lors qu'il est chauffé, pour piéger au moins en partie des espèces gazeuses susceptible d'être présentes dans l'enceinte, avantageusement l'une et/ou l'autre des deux électrodes comprend du titane et/ou du zirconium.

11. Source selon l'une des revendications 1 à 10, dans lequel la source 100 comprend en outre un filtre passe bande destiné à filtrer le rayonnement infrarouge émis par ladite source.

12. Dispositif de détection photo acoustique de gaz comportant la source (100) selon l'une des revendications 1 à 11.

13. Dispositif de détection de gaz par spectroscopie infrarouge comportant la source (100) selon l'une des revendications 1 à 11.

14. Procédé de fabrication d'une source de rayonnement infrarouge, le procédé comprenant :
a) une étape de formation d'une membrane (200) comprenant deux faces essentiellement parallèles dites, respectivement, face avant (210) et face arrière (220), la membrane (200) étant adaptée pour émettre un rayonnement infrarouge selon l'une et l'autre de ses faces, la membrane étant maintenue en suspension par rapport à un support (400), la face arrière (220) en regard et à une distance D d'une paroi (410), ladite paroi (410) étant en outre adaptée pour réfléchir le rayonnement infrarouge susceptible d'être émis par la membrane (200) ;
b) la formation de moyens d'actionnement électrostatique (300) qui comprennent deux électrodes dites, respectivement, première électrode (420) et seconde électrode (430), disposées en regard l'une de l'autre, et destinées, par application d'une différence de potentiel électrostatique entre lesdites électrodes, à faire varier la distance D;
la membrane (200) et les moyens d'actionnement électrostatique (300) étant agencées de sorte que, pour chaque longueur d'onde, le rayonnement infrarouge émis par la face arrière (220), est réfléchi par la paroi (410), traverse la membrane (200) de sa face arrière (220) vers sa face avant (210) et interfère avec le rayonnement infrarouge émis par la face avant (210).

15. Procédé selon la revendication 14, dans lequel l'étape a) comprend la formation d'un empilement (20) sur une première face d'un substrat support (10), ledit empilement (20) étant destiné à former la membrane (200).

16. Procédé selon revendication 15, dans lequel le substrat support (10) est assemblé avec un second substrat support (40), l'assemblage étant avantageusement hermétique, le second substrat support (40) comprenant une cavité (41) dont le fond forme la paroi (410), avantageusement la paroi (410) est tapissée de la première électrode (420).

17. Procédé selon la revendication 16, dans lequel l'assemblage du substrat support (10) et du second substrat support (40) est suivi de la formation d'une ouverture traversante (51) du substrat support (10) à partir d'une seconde face dudit substrat support (10) opposée à la première face, la formation de l'ouverture traversante (51) destinée à libérer la membrane (200).

18. Procédé selon la revendication 17, dans lequel l'étape b) comprend la formation de la seconde électrode (26) en recouvrement de la membrane (200).

19. Procédé selon la revendication 18, dans lequel un capot (60) est formé en recouvrement de l'ouverture traversante (51) par la seconde face du substrat support.

## Patentansprüche

1. Modellierbare Infrarot-Strahlungsquelle (100), enthaltend:
- einen Träger (400), der mit einer flachen Wand (410) versehen ist;
- eine Membran (200), die zwei im Wesentlichen parallele Seiten, Vorderseite (210) bzw. Rückseite (220) genannt, aufweist, wobei die Membran (200) dazu ausgelegt ist, eine Infrarotstrahlung entlang der einen und der anderen ihrer Seiten zu emittieren, und in Bezug auf den Träger (400) in der Schwebe gehalten wird, wobei die Rückseite (220) der Wand (410) zugewandt ist und sich in einem Abstand D von dieser befindet, wobei die Wand (410) ferner dazu ausgelegt ist, die Infrarotstrahlung, die von der Membran (200) emittiert werden kann, zu reflektieren;
- elektrostatische Betätigungsmittel (300), die zwei Elektroden, erste Elektrode (420) bzw. zweite Elektrode (430) genannt, enthalten, die einander gegenüberliegend angeordnet und dazu bestimmt sind, durch Anlegen einer elektrostatischen Potentialdifferenz zwischen den Elektroden den Abstand D zu verändern;
wobei die Membran (200) und die elektrostatischen Betätigungsmittel (300) so angeordnet sind, dass bei jeder Wellenlänge die von der Rückseite (220) emittierte Infrarotstrahlung von der Wand (410) reflektiert wird, die Membran (200) von ihrer Rückseite (220) zu ihrer Vorderseite (210) hin durchdringt und mit der von der Vorderseite (210) emittierten Infrarotstrahlung interferiert.

2. Quelle nach Anspruch 1, wobei die Membran (200) eine Emissionsschicht (230) enthält, die, wenn ein Strom durch sie fließt, sich erwärmt und Infrarotstrahlung emittiert.

3. Quelle nach Anspruch 2, wobei die Membran (200) von ihrer Vorderseite (210) bis zu ihrer Rückseite (220) eine vordere dielektrische Schicht (240), die Emissionsschicht (230) und eine hintere dielektrische Schicht (250) aufweist.

4. Quelle nach einem der Ansprüche 1 bis 3, wobei die Wand (410) die erste Elektrode (420) bildet und die zweite Elektrode (430) die Rückseite (220) überlappt, wobei die zweite Elektrode (430) zumindest teilweise transparent für die Infrarotstrahlung ist, die von der Membran (200) emittiert werden kann.

5. Quelle nach Anspruch 4, wobei die zweite Elektrode (430) derart durchbrochen ausgeführt ist, dass die zweite Elektrode (430) die Rückseite (220) mit einem Überlappungsfaktor zwischen 40% und 60% überlappt.

6. Quelle nach Anspruch 5, wobei die zweite Elektrode (430) mindestens eine der folgenden Formen aufweist: ein Gitter, eine kreisförmige Spirale, eine rechteckige Spirale, eine Schlangenlinie.

7. Quelle nach Anspruch 5 oder 6, wobei die zweite Elektrode (430) eine metallische Spezies umfasst, wobei die metallische Spezies vorteilhafterweise mindestens eines der Elemente umfasst, die ausgewählt sind aus: Kupfer, Aluminium, Wolfram, Gold, Platin, Silber, Palladium, Tantal, Molybdän.

8. Quelle nach Anspruch 4, wobei die zweite Elektrode (430) die Rückseite (220) vollständig überlappt, wobei vorteilhafterweise die zweite Elektrode (430) aus leitfähigem, transparentem Oxid hergestellt ist.

9. Quelle nach einem der Ansprüche 1 bis 8, wobei der Träger (400) ein hermetisch abgedichtetes Gehäuse ist, innerhalb dessen die Membran (200) angeordnet ist und dessen Umgebung auf einem Druck von weniger als 10⁻² mbar, vorzugsweise zwischen 10⁻³ mbar und 10⁻² mbar, gehalten wird.

10. Quelle nach Anspruch 8, wobei die eine und/oder die andere der Elektroden eine Falle aufweist, die geeignet ist, bei Erwärmung zumindest teilweise gasförmige Spezies einzufangen, die in dem Gehäuse vorhanden sein können, wobei vorteilhafterweise die eine und/oder die andere der beiden Elektroden Titan und/oder Zirkonium umfasst.

11. Quelle nach einem der Ansprüche 1 bis 10, wobei die Quelle 100 ferner einen Bandpassfilter zum Filtern der von der Quelle emittierten Infrarotstrahlung enthält.

12. Photoakustische Gasdetektionsvorrichtung mit der Quelle (100) nach einem der Ansprüche 1 bis 11.

13. Vorrichtung zur Detektion von Gas durch Infrarotspektroskopie mit der Quelle (100) nach einem der Ansprüche 1 bis 11.

14. Verfahren zur Herstellung einer Infrarot-Strahlungsquelle, wobei das Verfahren umfasst:
a) einen Schritt des Ausbildens einer Membran (200), die zwei im Wesentlichen parallele Seiten, Vorderseite (210) bzw. Rückseite (220) genannt, aufweist, wobei die Membran (200) dazu ausgelegt ist, eine Infrarotstrahlung entlang der einen und der anderen ihrer Seiten zu emittieren, wobei die Membran in Bezug auf einen Träger (400) in Schwebe gehalten wird, wobei die Rückseite (220) einer Wand (410) zugewandt ist und sich in einem Abstand D von dieser befindet, wobei die Wand (410) ferner dazu ausgelegt ist, die Infrarotstrahlung, die von der Membran (200) emittiert werden kann, zu reflektieren;
b) das Ausbilden von elektrostatischen Betätigungsmitteln (300), die zwei Elektroden, erste Elektrode (420) bzw. zweite Elektrode (430) genannt, enthalten, die einander gegenüberliegend angeordnet und dazu bestimmt sind, durch Anlegen einer elektrostatischen Potentialdifferenz zwischen den genannten Elektroden den Abstand D zu verändern;
wobei die Membran (200) und die elektrostatischen Betätigungsmittel (300) so angeordnet sind, dass bei jeder Wellenlänge die von der Rückseite (220) emittierte Infrarotstrahlung von der Wand (410) reflektiert wird, die Membran (200) von ihrer Rückseite (220) zu ihrer Vorderseite (210) hin durchdringt und mit der von der Vorderseite (210) emittierten Infrarotstrahlung interferiert.

15. Verfahren nach Anspruch 14, wobei Schritt a) die Bildung einer Stapelung (20) auf einer ersten Seite eines Trägersubstrats (10) umfasst, wobei die Stapelung (20) dazu bestimmt ist, die Membran (200) zu bilden.

16. Verfahren nach Anspruch 15, wobei das Trägersubstrat (10) mit einem zweiten Trägersubstrat (40) zusammengefügt wird, wobei die Zusammenfügung vorteilhafterweise hermetisch dicht ist, wobei das zweite Trägersubstrat (40) einen Hohlraum (41) aufweist, dessen Boden die Wand (410) bildet, wobei die Wand (410) vorteilhafterweise mit der ersten Elektrode (420) ausgekleidet ist.

17. Verfahren nach Anspruch 16, wobei auf das Zusammenfügen des Trägersubstrats (10) und des zweiten Trägersubstrats (40) die Bildung einer Durchgangsöffnung (51) des Trägersubstrats (10) ausgehend von einer zweiten, der ersten Seite gegenüberliegenden Seite des Trägersubstrats (10) folgt, wobei die Bildung der Durchgangsöffnung (51) dazu bestimmt ist, die Membran (200) freizugeben.

18. Verfahren nach Anspruch 17, wobei Schritt b) die Bildung der zweiten Elektrode (26) in Überlappung mit der Membran (200) umfasst.

19. Verfahren nach Anspruch 18, wobei eine Kappe (60) in Überlappung mit der Durchgangsöffnung (51) mittels der zweiten Seite des Trägersubstrats gebildet wird.

## Claims

1. Modular infrared radiation source (100) which comprises:
- a support (400) provided with a flat wall (410);
- a membrane (200) comprising two essentially parallel faces designated, respectively, front face (210) and rear face (220), the membrane (200) being adapted to emit an infrared radiation according to one and the other of its faces, and maintained in suspension with respect to the support (400), the rear face (220) facing and at a distance D from the wall (410), said wall (410) being further adapted to reflect the infrared radiation capable of being emitted by the membrane (200);
- electrostatic actuating means (300) that comprise two electrodes designated, respectively, first electrode (420) and second electrode (430), arranged facing each other, and intended, by application of a difference in electrostatic potential between said electrodes, to vary the distance D;
the membrane (200) and the electrostatic actuating means (300) being laid out such that, for each wavelength, the infrared radiation emitted by the rear face (220) is reflected by the wall (410), passes through the membrane (200) from its rear face (220) to its front face (210) and interferes with the infrared radiation emitted by the front face (210).

2. Source according to claim 1, in which the membrane (200) comprises an emissive layer (230) which, when it is traversed by a current, heats up and emits infrared radiation.

3. Source according to claim 2, in which the membrane (200) comprises from its front face (210) to its rear face (220), a front dielectric layer (240), the emissive layer (230), and a rear dielectric layer (250).

4. Source according to any of claims 1 to 3, in which the wall (410) forms the first electrode (420) and the second electrode (430) is covering the rear face (220), the second electrode (430) being at least partially transparent to the infrared radiation capable of being emitted by the membrane (200).

5. Source according to claim 4, in which the second electrode (430) is cut out such that said second electrode (430) covers the rear face (220) according to a coverage factor comprised between 40 % and 60 %.

6. Source according to claim 5, in which the second electrode (430) has at least one of the shapes selected from: a grid, a circular spiral, a rectangular spiral, a coil.

7. Source according to claim 5 or 6, in which the second electrode (430) comprises a metal species, advantageously the metal species comprising at least one of the elements selected from: copper, aluminium, tungsten, gold, platinum, silver, palladium, tantalum, molybdenum.

8. Source according to claim 4, in which the second electrode (430) wholly covers the rear face (220), advantageously the second electrode (430) is made of conductive transparent oxide.

9. Source according to any of claims 1 to 8, in which the support (400) is a hermetically sealed enclosure, inside of which the membrane (200) is arranged, and of which the environment is maintained at a pressure below 10⁻² mbars, preferentially comprised between 10⁻³ mbars and 10⁻² mbars.

10. Source according to claim 8, in which one and/or the other of the electrodes comprises a trap adapted, from the moment that it is heated, to trap at least in part gaseous species capable of being present in the enclosure, advantageously one and/or the other of the two electrodes comprises titanium and/or zirconium.

11. Source according to any of claims 1 to 10, in which the source 100 further comprises a band pass filter intended to filter the infrared radiation emitted by said source.

12. Photoacoustic gas detection device including the source (100) according to any of claims 1 to 11.

13. Device for detecting gas by infrared spectroscopy including the source (100) according to any of claims 1 to 11.

14. Method for manufacturing an infrared radiation source, the method comprising:
a) a step of formation of a membrane (200) comprising two essentially parallel faces designated, respectively, front face (210) and rear face (220), the membrane (200) being adapted to emit an infrared radiation according to one and the other of its faces, the membrane being maintained in suspension with respect to a support (400), the rear face (220) facing and at a distance D from a wall (410), said wall (410) further being adapted to reflect the infrared radiation capable of being emitted by the membrane (200);
b) the formation of electrostatic actuating means (300) which comprise two electrodes designated, respectively, first electrode (420) and second electrode (430), arranged facing each other, and intended, by application of a difference in electrostatic potential between said electrodes, to vary the distance D;
the membrane (200) and the electrostatic actuating means (300) being laid out such that, for each wavelength, the infrared radiation emitted by the rear face (220) is reflected by the wall (410), passes through the membrane (200) from its rear face (220) to its front face (210) and interferes with the infrared radiation emitted by the front face (210).

15. Method according to claim 14, in which the step a) comprises the formation of a stack (20) on a first face of a support substrate (10), said stack (20) being intended to form the membrane (200).

16. Method according to claim 15, in which the support substrate (10) is assembled with a second support substrate (40), the assembly being advantageously hermetic, the second support substrate (40) comprising a cavity (41) of which the bottom forms the wall (410), advantageously the wall (410) is lined with the first electrode (420).

17. Method according to claim 16, in which the assembly of the support substrate (10) and the second support substrate (40) is followed by the formation of a through opening (51) of the support substrate (10) from a second face of said support substrate (10) opposite to the first face, the formation of the through opening (51) intended to free the membrane (200).

18. Method according to claim 17, in which the step b) comprises the formation of the second electrode (26) covering the membrane (200).

19. Method according to claim 18, in which a cover (60) is formed covering the through opening (51) by the second face of the support substrate.
